# EUROPEAN PATENT SPECIFICATION

(11) **EP 3 213 516 B1**
(45) Date of publication and mention of the grant of the patent: **02.09.2020**
(21) Application number: 14904913.2
(22) Date of filing: 31.10.2014
(51) Int. Cl.: H04N 21/25, G06F 21/10, H04N 1/00, H04N 1/32, H04N 1/44, H04N 21/235, H04N 21/254, H04N 21/4627, H04N 21/8355

(54) **CONTROLLED CONTENT DELIVERY**
KONTROLLIERTE INHALTSBEREITSTELLUNG
DISTRIBUTION CONTRÔLÉE DE CONTENUS

(43) Date of publication of application: 06.09.2017
(73) Proprietor: Hewlett-Packard Development Company, L.P., Spring TX 77389 (US)
(72) Inventor: MULL, Larry, Corvallis, Oregon 97330-4239 (US); MANDIGO, Lonnie D., Corvallis, Oregon 97330-4239 (US)
(74) Representative: Haseltine Lake Kempner LLP
(86) International application number: PCT/US2014/063430
(87) International publication number: WO 2016/068995

(56) References cited:
- US-A1- 2012 019 867
- US-A1- 2012 092 693
- US-A1- 2012 127 504
- US-A1- 2013 107 312
- US-A1- 2014 122 630
- US-A1- 2014 211 242
- US-A1- 2014 304 762

## Description

### BACKGROUND

Electronic content sent by a sending entity may be received by a receiving entity. The receiving entity may perform various operations related to the electronic content, such as forwarding the content to other entities, deleting the content, printing the content, etc.

US 2012/092693 A1 relates to a distributed printing system for facilitating centralized print driver distribution in distributed printing environment.

### BRIEF DESCRIPTION OF DRAWINGS

Features of the present disclosure are illustrated by way of example and not limited in the following figure(s), in which like numerals indicate like elements, in which:
Figure 1A illustrates an architecture of a controlled content delivery apparatus, according to an example of the present disclosure;
Figure 1B illustrates an environment that illustrates operation of the controlled content delivery apparatus of Figure 1A, according to an example of the present disclosure;
Figure 2 illustrates further details of content, mailboxes, delivery system adapters (DSAs), and devices that receive content for the controlled content delivery apparatus of Figure 1A, according to an example of the present disclosure;
Figure 3 illustrates an example of implementation of the controlled content delivery apparatus of Figure 1A, according to an example of the present disclosure;
Figure 4 illustrates a method for controlled content delivery, according to an example of the present disclosure;
Figure 5 illustrates further details of the method for controlled content delivery, according to an example of the present disclosure;
Figure 6 illustrates further details of the method for controlled content delivery, according to an example of the present disclosure; and
Figure 7 illustrates a computer system, according to an example of the present disclosure.

### DETAILED DESCRIPTION

For simplicity and illustrative purposes, the present disclosure is described by referring mainly to examples. In the following description, numerous specific details are set forth in order to provide a thorough understanding of the present disclosure. It will be readily apparent however, that the present disclosure may be practiced without limitation to these specific details. In other instances, some methods and structures have not been described in detail so as not to unnecessarily obscure the present disclosure.

Throughout the present disclosure, the terms "a" and "an" are intended to denote at least one of a particular element. As used herein, the term "includes" means includes but not limited to, the term "including" means including but not limited to. The term "based on" means based at least in part on.

Content that is electronically delivered from a content provider to a content recipient may include coupons, news-letters, subscriptions, etc., and generally any product that a content provider is to send to a content recipient. The content provider may need assurance (e.g., a guarantee, and/or an acknowledgement) that the content was actually delivered to the content recipient. Certain types of content, such as, coupons, news-letters, subscriptions, etc., need to be realized in a printed form. If a printer is left off by the content recipient, the content may not be delivered to the content recipient (e.g., if a print job expires), or may be delivered to the content recipient in an unplanned manner (e.g., when the printer is finally turned on).

According to examples, a controlled content delivery apparatus and a method for controlled content delivery are disclosed herein. The apparatus and method disclosed herein may provide content recipients with the ability to access and use their content from a single location, making the content available on multiple devices, and for multiple destinations and purposes. The apparatus and method disclosed herein may provide the flexibility and control of content recipients' needs, while adhering to content provider rules related to viewing, printing, and/or distribution of the content. Further, the apparatus and method disclosed herein may provide content recipients with the ability to control when and where they have access to their content, including where and how the content may be viewed, and where the content may be printed, along with the mechanisms that are used to enact printing. The apparatus and method disclosed herein may implement rules associated with content to provide content providers and content recipients adequate assurances related to content delivery (e.g., from the content provider viewpoint) and receipt (e.g., from the content recipient viewpoint).

The apparatus and method disclosed herein may provide for the accommodation of a variety of aspects related to content, such as, for example, the destination, intended use, distribution rights, need for archival, sharing, redistribution, etc. For the apparatus and method disclosed herein, content providers may control and define these attributes on a case-by-case basis (e.g., on a per document basis) as metadata related to the content. The apparatus and method disclosed herein may also provide content recipients increased flexibility, for example, by allowing content recipients with the ability to manage the destination device (e.g., printer, mobile device, etc.), location, sharing, redistribution, copies, and other attributes within the scope of content provider specifications.

Generally, the apparatus and method disclosed herein may include a plurality of mailboxes associated with content recipients. The mailboxes may be digital mailboxes, and generally any types of mailboxes that are used to receive content electronically. The digital mailboxes may operate in conjunction with a rules module to receive and distribute content (e.g., documents, information, etc.) to a receiving device such as a printer. When a content provider is to provide content to a content recipient, the content may be placed in a digital mailbox associated with the content recipient. The content may include metadata that defines, for example, how the content may be printed, viewed, etc., on a particular device, redistributed, shared, or stored for future use.

Once staged within the content recipient's mailbox, the content recipient may manage and dispose of the content as provided by use rights associated with the content. For example, content rules may allow for multiple views on any display device, and restrict print output to one copy. According to another example, content rules may allow for output to certain printer models, and disallow output to other printer models. According to another example, content rules may specify printing on legal size media, and disallow output to other sizes. When a content recipient experiences issues or failures associated with the delivery of the content, the content recipient may be notified of the issues or failures. Further, the content recipient may be notified of specific ways to address the issues or failures. Once the issues or failures are addressed, the content recipient may access the content in their digital mailbox, and attempt to output the content again to the same device, or to a different device. In this manner, the apparatus and method disclosed herein may provide a notification as to the outcome of the delivery and/or receipt of the content to the content provider and/or the content recipient respectively, regardless of whether the content is successfully or unsuccessfully delivered to the content recipient.

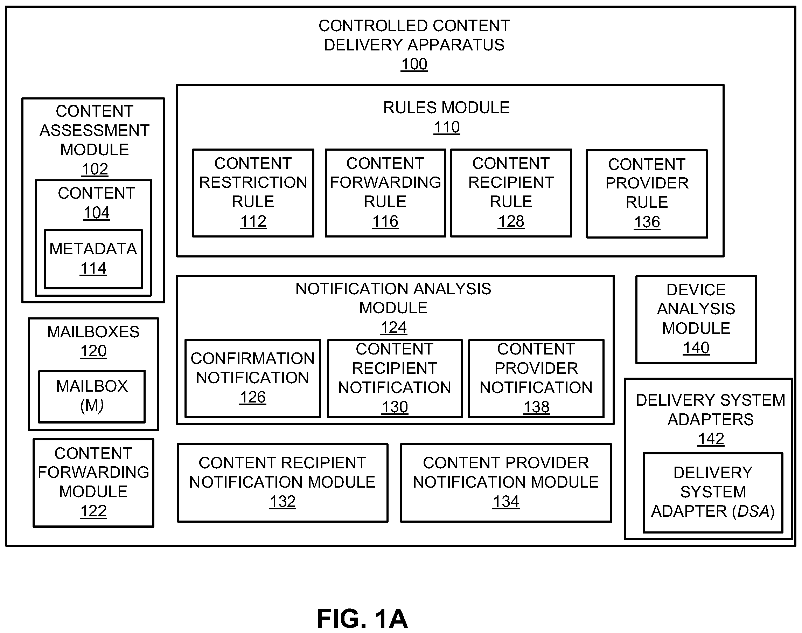

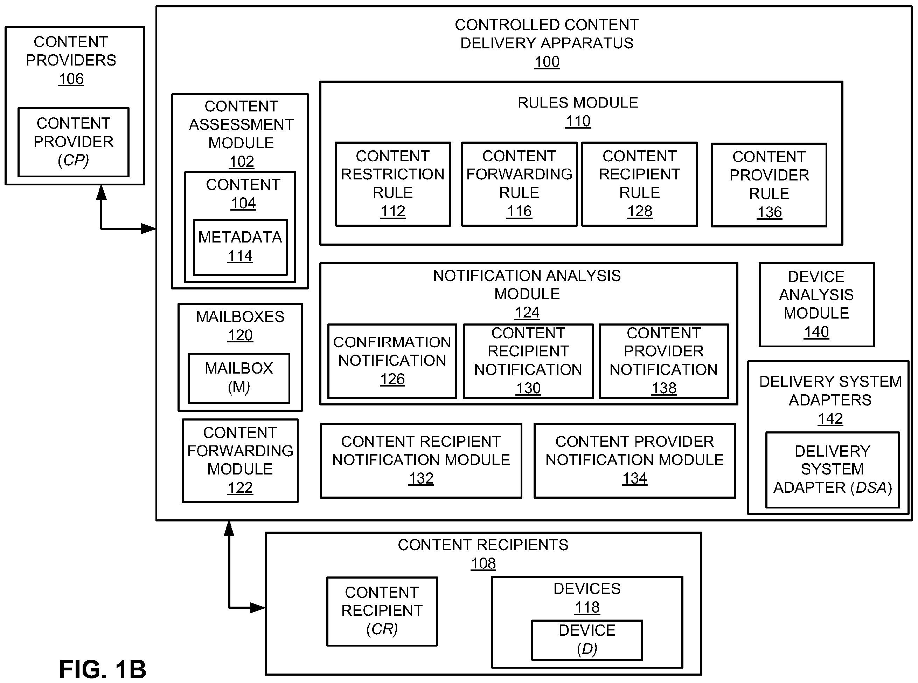

Figure 1A illustrates an architecture of a controlled content delivery apparatus 100 (hereinafter also referred to as "apparatus 100"), according to an example of the present disclosure. Figure 1B illustrates an environment to illustrate operation of the apparatus 100, according to an example of the present disclosure. Referring to Figures 1A and 1B, the apparatus 100 is depicted as including a content assessment module 102 to assess content 104 received from a content provider *CP* of a plurality of content providers 106. The content 104 may generally include any type of information, documents, etc., that may be sent from the content provider *CP* to a content recipient *CR* of a plurality of content recipients 108.

A rules module 110 may analyze a content restriction rule 112 associated with the content 104 based on metadata 114 related to the content 104 to determine a restriction related to use of the content 104.

The rules module 110 may analyze a content forwarding rule 116 associated with the content 104 based on the metadata 114 to determine whether to forward the content 104 to a device *D* of a plurality of devices 118 that are associated with the content recipient *CR.*

The received content 104 may be held in a mailbox *M* of a plurality of mailboxes 120 for the content recipient *CR* of the content 104. According to an example, the mailboxes 120 may include digital mailboxes, or other such electronic mailboxes that may be used to receive content.

With respect to content forwarding, in response to a determination that the content 104 is to be forwarded to the device *D,* a content forwarding module 122 may forward the content 104 to the device *D* for performing an action *A* permitted based on the use of the content 104 specified by the restriction.

A notification analysis module 124 may analyze a confirmation notification 126 associated with the device *D*. For example, the notification analysis module 124 may receive the confirmation notification 126 from a DSA associated with the device *D*. The DSA associated with the device *D* may forward the confirmation notification 126 to the notification analysis module 124 based on the specific action *A* performed by the device *D*. The notification analysis module 124 may determine whether the action *A* is performed based on the confirmation notification 126.

With respect to the notification analysis module 124, in response to a determination that the action *A* was not performed, the rules module 110 may analyze a content recipient rule 128 associated with the content 104 based on the metadata 114 to determine whether to forward a content recipient notification 130 to the content recipient *CR.* The content recipient notification 130 may include an indication of a corrective act (e.g., adding paper to printer) that is to be performed (e.g., by the content recipient *CR*) to perform the action *A.* Generally, the content recipient notification 130 may include a corrective act description that is provided to the content recipient *CR,* where the corrective act, if performed, enables the action *A* to be performed.

With respect to content forwarding, in response to a determination to forward the content recipient notification 130 to the content recipient *CR,* a content recipient notification module 132 may forward the content recipient notification 130 to the content recipient *CR* by using a communication technique (e.g., SMS, e-mail, etc.) specified by the content recipient rule 128.

With respect to the notification analysis module 124, in response to a determination that the action was performed, a content provider notification module 134 may analyze a content provider rule 136 associated with the content 104 based on the metadata 114 to determine whether to forward a content provider notification 138 to the content provider *CP.* With respect to the content provider notification module 134, in response to a determination to forward the content provider notification 138 to the content provider *CP*, the content provider notification module 134 may forward the content provider notification 138 to the content provider *CP* by using a communication technique (e.g., SMS, e-mail, etc.) specified by the content provider rule 136.

With respect to analysis of the content forwarding rule 116 by the rules module 110 and forwarding of the content 104 to the device *D*, a device analysis module 140 may analyze the devices 118 to determine whether the device *D* is capable of performing the action. In response to a determination that the device *D* is capable of performing the action, the device analysis module 140 may select the device *D* from the devices 118. The device analysis module 140 may also determine whether a delivery system adapter (*DSA*) of a plurality of DSAs 142 is associated with the device *D* for performing the action. In response to a determination that the *DSA* is associated with the device *D*, the device analysis module 140 may select the *DSA* from the DSAs 142. Based on this selection of the device *D* (and the associated *DSA*) from the devices 118, the content forwarding module 122 may forward the content 104 to the device *D.* For example, the content forwarding module 122 may utilize the *DSA* to forward the content 104 to the device *D.*

The modules and other elements of the apparatus 100 may be machine readable instructions stored on a non-transitory computer readable medium. In this regard, the apparatus 100 may include or be a non-transitory computer readable medium. In addition, or alternatively, the modules and other elements of the apparatus 100 may be hardware or a combination of machine readable instructions and hardware.

With respect to the mailboxes 120, the apparatus 100 may include the mailboxes 120 for various content recipients 108. The mailboxes 120 may receive the content 104 from a content provider *CP* for delivery to a selected content recipient *CR* of the content recipients 108. The content 104 may be held in the mailbox *M* on behalf of the content recipient *CR.* Once the received content 104 is held in the mailbox *M* on behalf of the content recipient *CR,* based on various rules specified by the content provider *CP* associated with the content 104, the content recipient *CR* may be notified of the content 104 and/or the content 104 may be sent to the device *D* associated with the content recipient *CR.* The device *D* may be a printing device. Alternatively or additionally, the device *D* may be a viewing device such as a personal computer (PC), mobile device, etc.

With respect to the content provider *CP*, the rules module 110 may provide for a specified type of delivery (e.g., printing on paper) of the content 104 by the content provider *CP,* and receipt by the content recipient *CR.* For example, for the content 104 that includes a coupon, the rules module 110 may provide for printing of the coupon as specified by the content provider *CP.* The printing of the coupon may be provided as a restriction, for example, by the content restriction rule 112 that specifies that the content 104 is to be printed (e.g., as opposed to viewed). In this manner, the content provider *CP* may be assured that the coupon has indeed been printed by the content recipient *CR* so that the content recipient *CR* may use the coupon.

With respect to the content recipient *CR,* the rules module 110 may similarly provide for a specified type of receipt (e.g., printing via a mobile device) of the content 104 by the content recipient *CR.* For example, for the content 104 that is a newsletter that has been subscribed to by the content recipient *CR,* the rules module 110 may provide for receipt of the newsletter by the content recipient *CR* as specified by the content recipient *CR.* The specific type of receipt may also be provided as a restriction, for example, by the content restriction rule 112 that specifies that the content 104 is to be printed via a mobile device (e.g., as opposed to being received via e-mail and not being printed). In this manner, the content recipient *CR* may be assured that the newsletter has indeed been received in the manner specified by the content recipient *CR,* so that the content recipient *CR* may read the newsletter as needed.

The content provider notification module 134 may provide for notification to the content provider *CP* of the delivery of the content 104, or other aspects related to the delivery of the content 104. For example, once the content 104 is delivered to the content recipient *CR,* the content provider notification module 134 may provide a delivery confirmation notification (e.g., the content provider notification 138) to the content provider *CP* with respect to the delivery of the content 104. Similarly, if the content 104 is not delivered to the content recipient CR, the content provider notification module 134 may provide a delivery failure notification to the content provider *CP* with respect to the delivery of the content 104. Further, if there are other issues associated with the delivery of the content 104 to the content recipient *CR,* the content provider notification module 134 may provide a delivery issue notification to the content provider *CP* with respect to the delivery of the content 104.

The content recipient notification module 132 may provide for notification to the content recipient *CR* of the receipt of the content 104, or other aspects related to the receipt of the content 104. For example, once the content 104 is received by the content recipient *CR,* the content recipient notification module 132 may provide a receipt confirmation notification to the content recipient *CR* with respect to receipt of the content 104. Similarly, if the content 104 is not received by the content recipient *CR,* the content recipient notification module 132 may provide for a receipt failure notification (e.g., the content recipient notification 130) to the content recipient *CR* with respect to the content 104. Further, if there are other issues associated with the receipt of the content 104 by the content recipient *CR,* the content recipient notification module 132 may provide a receipt issue notification to the content recipient *CR* with respect to the receipt of the content 104.

With respect to the content recipient notification module 132 and the content provider notification module 134, the various notifications associated with the content provider *CR* and the content recipient *CP* may be determined by the notification analysis module 124. The notification analysis module 124 may analyze various aspects related to the content 104. For example, the notification analysis module 124 may analyze the delivery status to forward (e.g., by using the content provider notification module 134) a content provider notification 138 to the content provider *CP* of a successful delivery. Alternatively, the notification analysis module 124 may analyze the delivery status to forward (e.g., by using the content recipient notification module 132) a content recipient notification 130 to the content recipient *CR* of a delivery failure. With respect to a delivery failure, the content recipient notification module 132 may forward a content recipient notification 130 to the content recipient *CR* of actions that are needed for a successful content delivery. For example, with respect to a delivery failure, the content recipient notification module 132 may forward a content recipient notification 130 to the content recipient *CR* to turn a printer on, to add paper to a printer, etc., for successful content delivery.

Thus, the notification analysis module 124 may provide the content provider *CP* and/or the content recipient *CR* notifications as to the outcome of the delivery, receipt of the content 104, and corrective acts that are needed to implement delivery of the content 104.

The rules module 110 may organize the flow of the content 104 relative to different delivery targets. For example, the rules module 110 may direct the flow of the content 104 to a specific type of printer (e.g., a device *D* of the devices 118) specified by the content provider *CP* and/or by the content recipient *CR* for delivery of the content 104. According to another example, the rules module 110 may direct the flow of the content 104 via a specific DSA (e.g., the *DSA* of the DSAs 142) specified by the content provider *CP* and/or the content recipient *CR* for delivery of the content 104.

The rules module 110 may also provide for balancing of the interests of the content provider *CP,* the content recipient *CR,* and the owners of the devices 118. According to an example, the rules module 110 may provide for the balancing of the interests of the content provider *CP* to deliver a specified number of copies of the content 104 to the content recipient *CR.* According to an example, the rules module 110 may provide for the balancing of the interests of the content recipient *CR* by receipt of a specified number of copies of the content by the content recipient *CR.* According to an example, the rules module 110 may provide for the balancing of the interests of the owners of the devices 118 by providing an indication to the owners of the devices 118 for payment related to the delivery of the specified number of copies of the content 104 to the content recipient *CR.*

The rules module 110 may operate in conjunction with a plurality of the DSAs 142 to direct the flow of the content 104 to a specific type of device *D* (e.g., a specific type of printer) specified by the content provider *CP* and/or the content recipient *CR* for delivery of the content 104. The DSAs 142 may provide the interface between the mailboxes 120 and the devices 118. The DSAs 142 may ascertain the state of a particular device of the devices 118, and submit content 104 (e.g., for a delivery job) to a particular device.

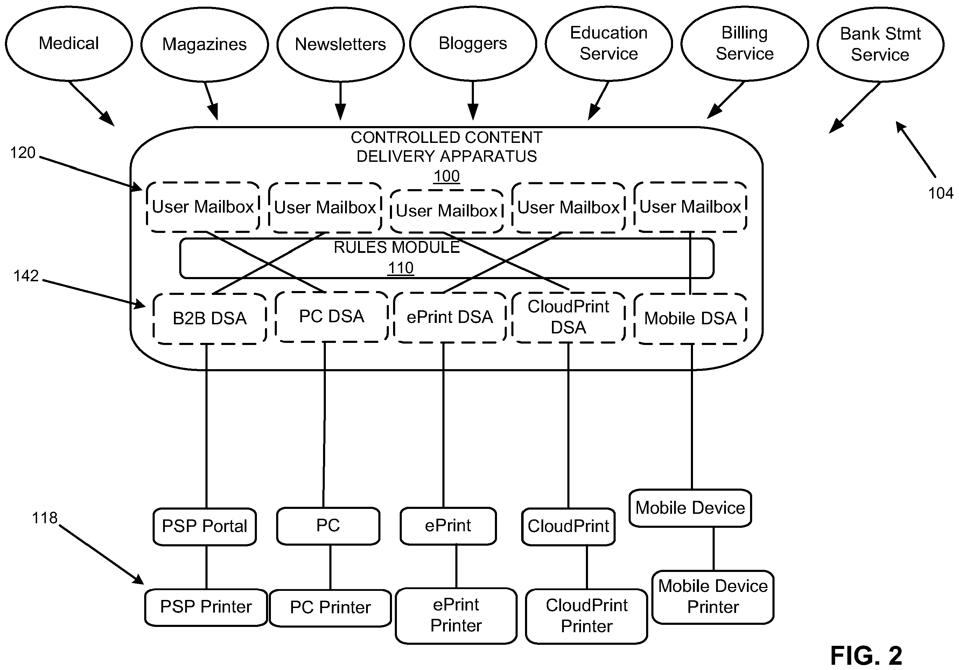

The DSAs 142 may provide the rules module 110 and the notification analysis module 124 the specific type of indication related to the outcome of a content delivery to the content recipient *CR.* Figure 2 illustrates further details of the content 104, mailboxes 120, the DSAs 142, and the devices 118 that receive content 104 for the apparatus 100, according to an example of the present disclosure. Referring to Figure 2, the business-to-business (B2B) *DSA,* which is related to commerce transactions between businesses, such as between a manufacturer and a wholesaler, may provide the rules module 110 an indication related to printing of the content 104 by the content recipient *CR* at a PSP portal (i.e., a web-to-print portal where a print job may be submitted via a web interface). In this same manner, other DSAs, such as, for example, the XYZ *DSA* (e.g., where XYZ is a specific application), the eprint *DSA,* the cloudprint *DSA,* and the mobile *DSA,* may respectively provide for printing of the content 104 to a printer via a PC, an email enabled printer, a printer via a cloud service, and a printer via a mobile device. The other DSAs 142 may also provide an indication of a specific outcome of the printing that is relative to the particular DSA to the rules module 110 (and the notification analysis module 124). For example, the eprint *DSA* may provide an indication related to printing or non-printing of eprints, time of an eprint, etc., to the rules module 110 (and the notification analysis module 124).

Based on the particulars of the content 104, the rules module 110 may eliminate certain DSAs 142 from consideration for performing a particular job. For example, with respect to the XYZ *DSA,* all of the devices 118 except the device associated with the XYZ *DSA* may be eliminated since the other devices may not provide adequate information to the rules module 110 or the notification analysis module 124 as to a specific outcome of a printing job.

The mailboxes 120 may provide several functions related to delivery of the content 104 to the content recipient *CR.* Upon receipt of the content 104 from the content provider, the content 104 may be stored or otherwise held in the appropriate mailbox *M* of the mailboxes 120 before being forwarded by the content forwarding module 122 to the appropriate DSA, and thereafter discarded from the relevant mailbox. In the event of a delivery failure, the content 104 may remain in the appropriate mailbox *M* until a resolution is reached as to the outcome of the delivery.

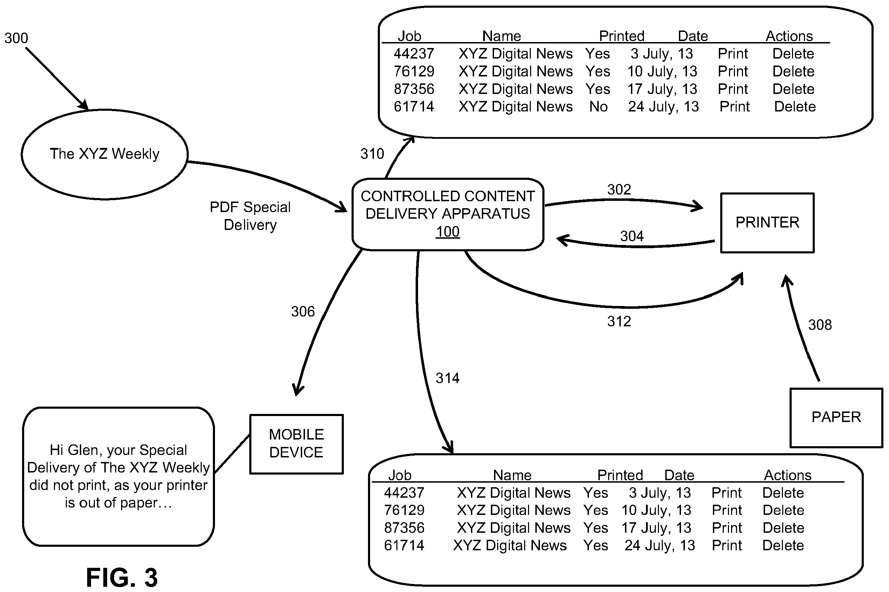

Figure 3 illustrates an example of implementation of the apparatus 100, according to an example of the present disclosure.

Referring to Figure 3, at 300, the content provider *CP* (e.g., a provider of the XYZ weekly) may transmit the content 104 via special delivery to the apparatus 100. As described herein, with respect to special content delivery, the apparatus 100 may provide for immediate printing on a printer (e.g., the device *D*) determined by the content recipient *CR,* and/or based on the context of the print job specified by the metadata 114. The content 104 may be placed in the digital mailbox *M* for the content recipient associated with the content 104.

At 302, the rules module 110 may process any specifications related to the content 104, and transmit the content 104 to a printer specified by the content recipient *CR.* For example, the rules module 110 may process the special delivery specifications related to the content 104, and transmit the content 104 to a printer specified by the content recipient *CR* for special delivery.

At 304, assuming that the print job fails (e.g., the printer is out of paper), the apparatus 100 may be notified of the failed print (e.g., via a content recipient notification 130). The notification analysis module 124 may process the failed print notification, and may further notify the content recipient *CR* of the printer failure.

For example, at 306, the content recipient notification module 132 may forward the content recipient notification 130 to the content recipient *CR* indicating that the printer is out of paper. Assuming that the content recipient rule 128 associated with such a failure provides for the content recipient *CR* to be notified via SMS, the content recipient notification module 132 may forward a SMS notification to a smartphone specified by the content recipient *CR.*

At 308, assuming that the printer is loaded with paper, at 310, at the digital mailbox associated with the content recipient *CR,* the content recipient *CR* may select the print option to print the content 104 (e.g., job number 61714).

At 312, based on a command to print the content 104, the content 104 may be successfully printed.

At 314, the current status of the print job for the content 104 may be changed to printed in the content recipient's digital mailbox. Further, a content provider notification 138 may be sent to the content provider *CP* of the successful printing of the content 104.

The apparatus 100 may provide various benefits with respect to the content providers 106. For example, the apparatus 100 may provide a single interface for content delivery via the DSAs 142.

The apparatus 100 may also provide for support of delivery to any printer, device, or web destination. For example, the various DSAs 142 may be used to provide support of delivery to any printer, device, or web destination.

With respect to special content delivery, the apparatus 100 may also provide for immediate printing on a printer determined by the content recipient *CR,* and/or based on the context of the print job as determined by the metadata 114. For example, based on the context of a print job (e.g., a medical document, or a document based on an interaction of the content recipient *CR* with a web service), the print job may be designated as a special delivery and printed immediately (e.g., as opposed to during a specified print period).

With respect to general content delivery, the apparatus 100 may provide for printing on a printer determined by the content recipient *CR* during a scheduled period. For example, print jobs may be stored in an appropriate mailbox (e.g., the mailbox *M*) of the mailboxes 120, and printed during a specified printing period.

With respect to delivery certification, the apparatus 100 may provide a return confirmation of a successful content delivery (e.g., successful print), for example, via the content recipient notification 130 and/or the content provider notification 138. Similarly, the apparatus 100 may provide a return confirmation of an unsuccessful content delivery (e.g., an unsuccessful print), for example, via the content recipient notification 130 and/or the content provider notification 138.

With respect to secure content delivery, the apparatus 100 may restrict content delivery based on entry of a password, PIN, or another type of security measure by the content provider *CP* and/or the content recipient *CR.* The rules module 110 may implement the enforcement of a password, a PIN, or another type of security measure with respect to the content 104.

With respect to print policies, the apparatus 100 may implement print policies such as limitations on the number of successful prints (or print attempts), limitations on the number of days that the content 104 is available in an appropriate mailbox (e.g., the mailbox *M*) of the mailboxes 120, before deletion (e.g., removal) of the content 104 from the appropriate mailbox. For example, the apparatus 100 may limit the number of successful prints to ten prints before deletion of the content 104 from an appropriate mailbox of the mailboxes 120.

The apparatus 100 may provide various benefits with respect to the content recipient *CR.* For example, the apparatus 100 may provide printer selection where the content recipient *CR* may print the content 104 on any participating printer (unless such a selection violates the content restriction rule 112 as specified by the content provider *CP*).

With respect to scheduled deliveries, the apparatus 100 may provide for printing of the content 104 on a default printer specified by the content recipient *CR.* Further, the apparatus 100 may provide for printing of the content 104 on the default printer at times that are specified by the content recipient *CR.*

With respect to global pausing, the apparatus 100 may provide for the suspending of delivery of the content 104 to the content recipient *CR* until a specified time. For example, the apparatus 100 may provide for the suspending of delivery to the content recipient *CR* until 9:00 AM, during weekend hours, etc.

With respect to notification, the apparatus 100 may utilize the rules module 110 and the notification analysis module 124 to generate notifications to the content recipient *CR* and/or the content provider *CP.* For example, the apparatus 100 may utilize the rules module 110 and the notification analysis module 124 to generate a notification to attend a print job (e.g., when a printer is out of paper, or any other issues related to a printer).

With respect to access interfaces, the apparatus 100 may be implemented via a web interface, a mobile application interface, and other such interfaces. In this manner, the content provider *CP* may utilize the access interfaces to upload the content 104 and related metadata 114. Similarly, the content recipient *CR* may utilize the access interfaces to access the content 104 and/or enter specifications related to receipt of the content 104.

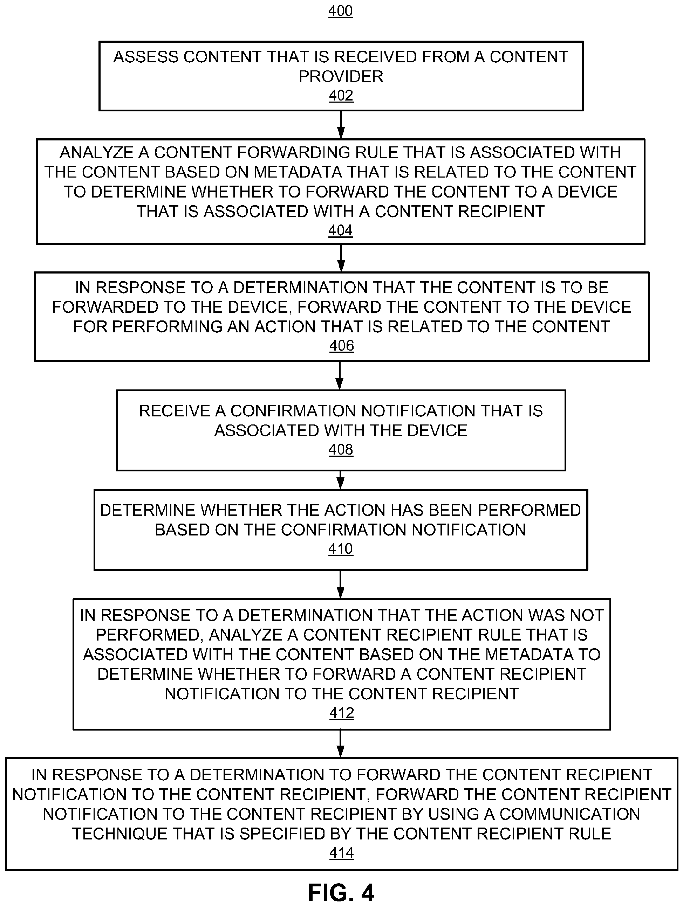

Figures 4-6 respectively illustrate flowcharts of methods 400, 500, and 600 for controlled content delivery, corresponding to the example of the apparatus 100 whose construction is described in detail above. The methods 400, 500, and 600 may be implemented on the apparatus 100 with reference to Figures 1A-3 by way of example and not limitation. The methods 400, 500, and 600 may be practiced in other apparatus.

Referring to Figure 4, for the method 400, at block 402, the method may include assessing content received from a content provider. For example, referring to Figures 1A-3, the content assessment module 102 may assess content 104 received from a content provider *CP* of a plurality of content providers 106.

At block 404, the method may include analyzing a content forwarding rule associated with the content based on metadata related to the content to determine whether to forward the content to a device associated with a content recipient. For example, referring to Figures 1A-3, the rules module 110 may analyze a content forwarding rule 116 associated with the content 104 based on the metadata 114 to determine whether to forward the content 104 to a device *D* of the plurality of devices 118 that are associated with the content recipient *CR.*

At block 406, in response to a determination that the content is to be forwarded to the device, the method may include forwarding the content to the device for performing an action related to the content. For example, referring to Figures 1A-3, in response to a determination that the content 104 is to be forwarded to the device *D,* the content forwarding module 122 may forward the content 104 to the device *D* for performing an action *A* permitted based on the use of the content 104 specified by the restriction.

At block 408, the method may include receiving a confirmation notification associated with the device. For example, referring to Figures 1A-3, the notification analysis module 124 may receive the confirmation notification 126 associated with the device *D.*

At block 410, the method may include determining whether the action has been performed based on the confirmation notification. For example, referring to Figures 1A-3, the notification analysis module 124 may determine whether the action *A* is performed based on the confirmation notification 126.

At block 412, in response to a determination that the action was not performed, the method may include analyzing a content recipient rule associated with the content based on the metadata to determine whether to forward a content recipient notification to the content recipient. For example, referring to Figures 1A-3, with respect to the notification analysis module 124, in response to a determination that the action *A* was not performed, the rules module 110 may analyze the content recipient rule 128 associated with the content 104 based on the metadata 114 to determine whether to forward a content recipient notification 130 to the content recipient *CR.*

At block 414, in response to a determination to forward the content recipient notification to the content recipient, the method may include forwarding the content recipient notification to the content recipient by using a communication technique specified by the content recipient rule. For example, referring to Figures 1A-3, with respect to content forwarding, in response to a determination to forward the content recipient notification 130 to the content recipient *CR,* the content recipient notification module 132 may forward the content recipient notification 130 to the content recipient *CR* by using a communication technique (e.g., SMS, e-mail, etc.) specified by the content recipient rule 128.

According to an example, for the method 400, analyzing a content recipient rule associated with the content based on the metadata to determine whether to forward a content recipient notification to the content recipient may further include determining, based on the analysis of the content recipient rule, to include in the content recipient notification an indication of a corrective act to be performed to enable the action to be performed subsequently.

According to an example, for the method 400, the action may include printing of the content.

According to an example, for the method 400, forwarding the content to the device for performing an action related to the content may further include generating instructions that specify how to print the content based on the metadata. The instructions may be executable by the device to cause the device to print the content based on the specification.

According to an example, for the method 400, forwarding the content to the device for performing an action related to the content may further include generating instructions that specify a time period associated with printing of the content based on the metadata. The instructions may be executable by the device to cause the device to print the content during the specified time period.

According to an example, for the method 400, analyzing a content forwarding rule associated with the content based on metadata related to the content to determine whether to forward the content to a device associated with a content recipient and forwarding the content to the device for performing an action related to the content may further include analyzing a plurality of devices that are associated with the content recipient to determine whether the device of the plurality of devices is capable of performing the action. In response to a determination that the device is capable of performing the action, the device may be selected from the plurality of devices, and the content may be forwarded to the device.

According to an example, for the method 400, analyzing a content forwarding rule associated with the content based on metadata related to the content to determine whether to forward the content to a device associated with a content recipient and forwarding the content to the device for performing an action related to the content may further include determining whether a DSA of a plurality of DSAs is associated with the device for performing the action. In response to a determination that the DSA is associated with the device, the DSA may be selected from the plurality of DSAs, and utilized to forward the content to the device.

According to an example, in response to a determination that the action was performed, the method 400 may further include analyzing a content provider rule associated with the content based on the metadata to determine whether to forward a content provider notification to the content provider. In response to a determination to forward the content provider notification to the content provider, the content provider notification may be forwarded to the content provider by using a communication technique specified by the content provider rule.

According to an example, for the method 400, receiving a confirmation notification associated with the device may further include utilizing a DSA associated with the device to generate the confirmation notification associated with the device, and receiving the confirmation notification from the DSA.

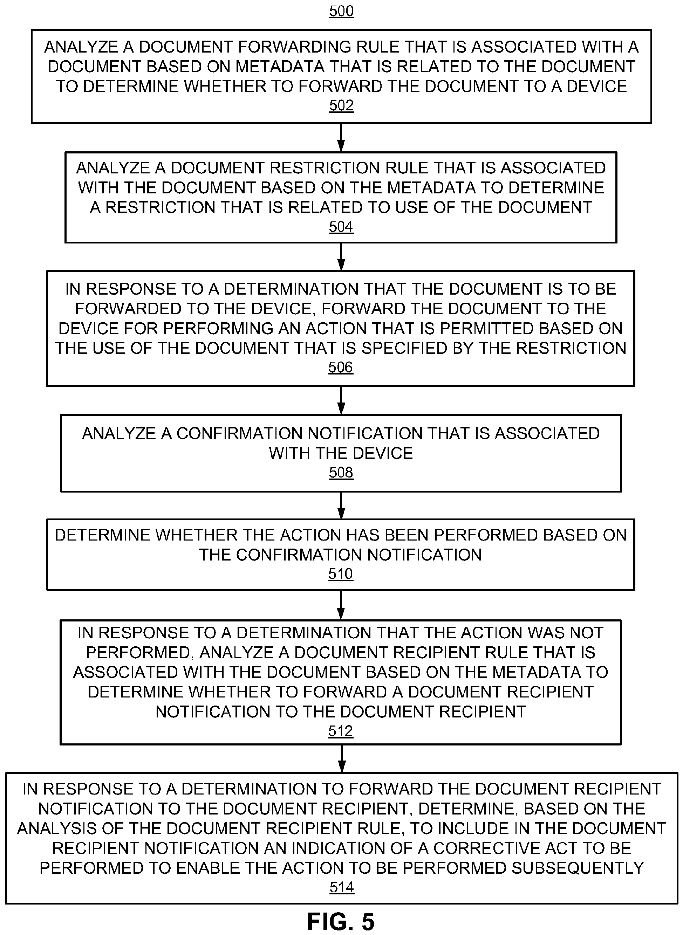

Referring to Figure 5, for the method 500, at block 502, the method may include analyzing a document forwarding rule associated with a document based on metadata related to the document to determine whether to forward the document to a device. For example, referring to Figures 1A-3, the rules module 110 may analyze the content forwarding rule 116 associated with the content 104 (e.g., where the content 104 may include information, documents, etc.) based on the metadata 114 to determine whether to forward the content 104 to a device *D* of a plurality of devices 118 that are associated with the content recipient *CR.*

At block 504, the method may include analyzing a document restriction rule associated with the document based on the metadata to determine a restriction related to use of the document. For example, referring to Figures 1A-3, the rules module 110 may analyze the content restriction rule 112 associated with the content 104 based on the metadata 114 related to the content 104 to determine a restriction related to use of the content 104.

At block 506, in response to a determination that the document is to be forwarded to the device, the method may include forwarding the document to the device for performing an action permitted based on the use of the document specified by the restriction. For example, referring to Figures 1A-3, in response to a determination that the content 104 is to be forwarded to the device *D,* the content forwarding module 122 may forward the content 104 to the device *D* for performing an action *A* permitted based on the use of the content 104 specified by the restriction.

At block 508, the method may include analyzing a confirmation notification associated with the device. For example, referring to Figures 1A-3, the notification analysis module 124 may analyze the confirmation notification 126 associated with the device *D.*

At block 510, the method may include determining whether the action has been performed based on the confirmation notification. For example, referring to Figures 1A-3, the notification analysis module 124 may determine whether the action A is performed based on the confirmation notification 126.

At block 512, in response to a determination that the action was not performed, the method may include analyzing a document recipient rule associated with the document based on the metadata to determine whether to forward a document recipient notification to the document recipient. For example, referring to Figures 1A-3, with respect to the notification analysis module 124, in response to a determination that the action *A* was not performed, the rules module 110 may analyze the content recipient rule 128 associated with the content 104 based on the metadata 114 to determine whether to forward a content recipient notification 130 to the content recipient *CR.*

At block 514, in response to a determination to forward the document recipient notification to the document recipient, the method may include determining, based on the analysis of the document recipient rule, to include in the document recipient notification an indication of a corrective act to be performed to enable the action to be performed subsequently. For example, the notification analysis module 124 may determine, based on the analysis of the content recipient rule 128, to include in the content recipient notification 130 an indication (e.g., a description) of a corrective act (e.g., adding paper to printer) to be performed to enable the action *A* to be performed subsequently. The notification analysis module 124 may also analyze the metadata 114 and the content recipient rule 128, and further operate in conjunction with the device analysis module 140 to determine, based on the analysis of the content recipient rule, to include in the content recipient notification an indication of a corrective act to be performed to enable the action to be performed subsequently.

According to an example, for the method 500, forwarding the document to the device for performing an action permitted based on the use of the document specified by the restriction may further include specifying a maximum number of times that the document is to be printed before deletion of the document based on the restriction.

According to an example, for the method 500, forwarding the document to the device for performing an action permitted based on the use of the document specified by the restriction may further include specifying a password needed to print the document based on the restriction.

According to an example, for the method 500, forwarding the document to the device for performing an action permitted based on the use of the document specified by the restriction may further include specifying a print override option to print the document based on the metadata.

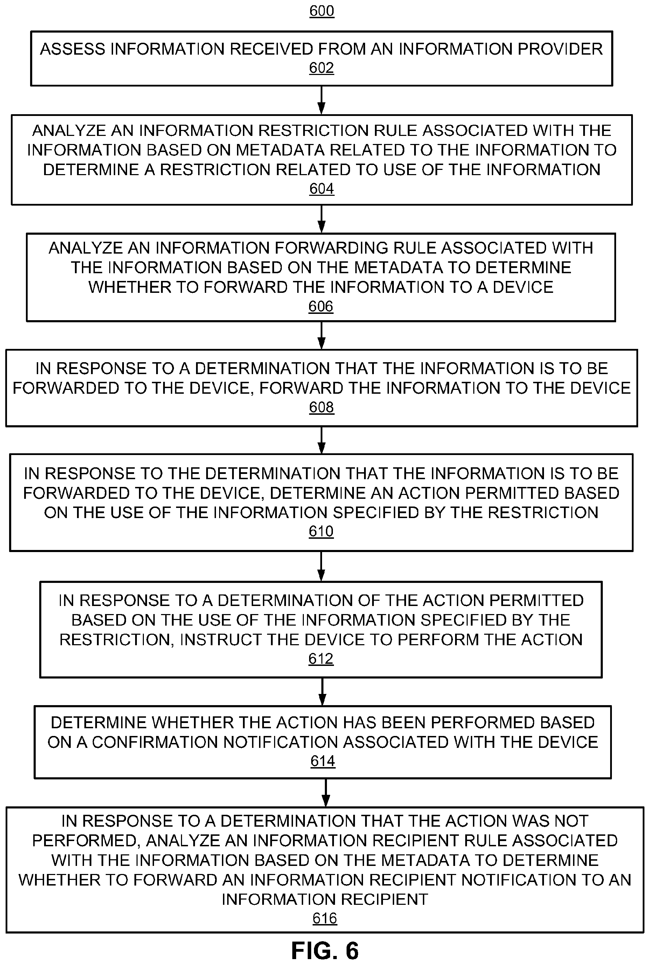

Referring to Figure 6, for the method 600, at block 602, the method may include assessing information received from an information provider. For example, referring to Figures 1A-3, the content assessment module 102 may assess content 104 (e.g., where the content 104 may include information, documents, etc.) received from a content provider *CP* of a plurality of content providers 106.

At block 604, the method may include analyzing an information restriction rule associated with the information based on metadata related to the information to determine a restriction related to use of the information. For example, referring to Figures 1A-3, the rules module 110 analyze the content restriction rule 112 associated with the content 104 based on the metadata 114 related to the content 104 to determine a restriction related to use of the content 104.

At block 606, the method may include analyzing an information forwarding rule associated with the information based on the metadata to determine whether to forward the information to a device. For example, referring to Figures 1A-3, the rules module 110 may analyze a content forwarding rule 116 associated with the content 104 based on the metadata 114 to determine whether to forward the content 104 to a device *D* of the plurality of devices 118 that are associated with the content recipient *CR.*

At block 608, in response to a determination that the information is to be forwarded to the device, the method may include forwarding the information to the device. For example, referring to Figures 1A-3, in response to a determination that the content 104 is to be forwarded to the device *D,* the content forwarding module 122 may forward the content 104 to the device *D* for performing an action *A* permitted based on the use of the content 104 specified by the restriction.

At block 610, in response to the determination that the information is to be forwarded to the device, the method may include determining an action permitted based on the use of the information specified by the restriction. For example, referring to Figures 1A-3, in response to the determination that the content 104 is to be forwarded to the device *D,* the rules module 110 may determine an action permitted based on the use of the content 104 specified by the restriction.

At block 612, in response to a determination of the action permitted based on the use of the information specified by the restriction, the method may include instructing the device to perform the action. For example, referring to Figures 1A-3, in response to a determination of the action *A* permitted based on the use of the content 104 specified by the restriction, the device analysis module 140 may instruct the device *D* to perform the action *A.*

At block 614, the method may include determining whether the action has been performed based on a confirmation notification associated with the device. For example, referring to Figures 1A-3, the notification analysis module 124 may determine whether the action *A* is performed based on the confirmation notification 126.

At block 616, in response to a determination that the action was not performed, the method may include analyzing an information recipient rule associated with the information based on the metadata to determine whether to forward an information recipient notification to an information recipient. For example, referring to Figures 1A-3, with respect to the notification analysis module 124, in response to a determination that the action *A* was not performed, the rules module 110 may analyze the content recipient rule 128 associated with the content 104 based on the metadata 114 to determine whether to forward a content recipient notification 130 to the content recipient *CR.*

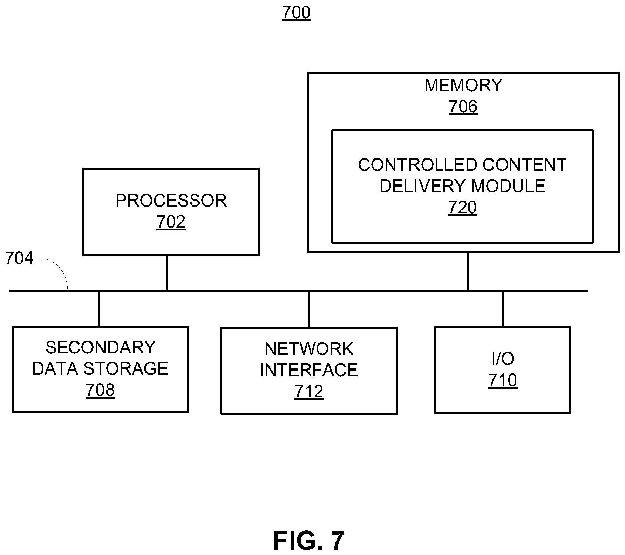

Figure 7 shows a computer system 700 that may be used with the examples described herein. The computer system 700 may represent a generic platform that includes components that may be in a server or another computer system. The computer system 700 may be used as a platform for the apparatus 100. The computer system 700 may execute, by a processor (e.g., a single or multiple processors) or other hardware processing circuit, the methods, functions and other processes described herein. These methods, functions and other processes may be embodied as machine readable instructions stored on a computer readable medium, which may be non-transitory, such as hardware storage devices (e.g., RAM (random access memory), ROM (read only memory), EPROM (erasable, programmable ROM), EEPROM (electrically erasable, programmable ROM), hard drives, and flash memory).

The computer system 700 may include a processor 702 that may implement or execute machine readable instructions performing some or all of the methods, functions and other processes described herein. Commands and data from the processor 702 may be communicated over a communication bus 704. The computer system may also include a main memory 706, such as a random access memory (RAM), where the machine readable instructions and data for the processor 702 may reside during runtime, and a secondary data storage 708, which may be non-volatile and stores machine readable instructions and data. The memory and data storage are examples of computer readable mediums. The memory 706 may include a controlled content delivery module 720 including machine readable instructions residing in the memory 706 during runtime and executed by the processor 702. The controlled content delivery module 720 may include the modules of the apparatus 100 shown in Figures 1A-3

The computer system 700 may include an I/O device 710, such as a keyboard, a mouse, a display, etc. The computer system may include a network interface 712 for connecting to a network. Other known electronic components may be added or substituted in the computer system.

What has been described and illustrated herein is an example along with some of its variations. The terms, descriptions and figures used herein are set forth by way of illustration only and are not meant as limitations. Many variations are possible within the scope of the subject matter, which is intended to be defined by the following claims -- and their equivalents -- in which all terms are meant in their broadest reasonable sense unless otherwise indicated.

## Claims

1. A method for controlled content delivery, the method comprising:
assessing content received by a content recipient from a content provider, the content including metadata;
analyzing, by a processor, a content forwarding rule associated with the content, based on the metadata related to the content, to determine whether to forward the content to a device associated with the content recipient;
in response to a determination that the content is to be forwarded to the device, forwarding the content to the device for performing an action, related to the content;
receiving a confirmation notification associated with the device;
determining whether the action has been performed based on the confirmation notification;
**characterized in that**
in response to a determination that the action was not performed, analyzing a content recipient rule associated with the content based on the metadata to determine whether to forward a content recipient notification to the content recipient; and
in response to a determination to forward the content recipient notification to the content recipient, forwarding the content recipient notification to the content recipient by using a communication technique specified by the content recipient rule; and
in response to a determination that the action was performed, analyzing a content provider rule associated with the content based on the metadata to determine whether to forward a content provider notification to the content provider; and
in response to a determination to forward the content provider notification to the content provider, forwarding the content provider notification to the content provider by using a communication technique specified by the content provider rule.

2. The method for controlled content delivery according to claim 1, wherein analyzing a content recipient rule associated with the content based on the metadata to determine whether to forward a content recipient notification to the content recipient further comprises:
determining, based on the analysis of the content recipient rule, to include in the content recipient notification an indication of a corrective act to be performed to enable the action to be performed subsequently.

3. The method for controlled content delivery according to claim 1, wherein the action includes printing of the content.

4. The method for controlled content delivery according to claim 1, wherein forwarding the content to the device for performing an action related to the content further comprises:
generating instructions that specify how to print the content based on the metadata, wherein the instructions are executable by the device to cause the device to print the content based on the specification.

5. The method for controlled content delivery according to claim 1, wherein forwarding the content to the device for performing an action related to the content further comprises:
generating instructions that specify a time period associated with printing of the content based on the metadata, wherein the instructions are executable by the device to cause the device to print the content during the specified time period.

6. The method for controlled content delivery according to claim 1 , wherein analyzing the content forwarding rule associated with the content based on the metadata related to the content to determine whether to forward the content to a device associated with a content recipient and forwarding the content to the device for performing an action related to the content further comprises:
analyzing a plurality of devices that are associated with the content recipient to determine whether the device of the plurality of devices is capable of performing the action;
in response to a determination that the device is capable of performing the action, selecting the device from the plurality of devices; and
forwarding the content to the device.

7. The method for controlled content delivery according to claim 1, wherein analyzing a content forwarding rule associated with the content based on the metadata related to the content to determine whether to forward the content to a device associated with a content recipient and forwarding the content to the device for performing an action related to the content further comprises:
determining whether a delivery system adapter (DSA) of a plurality of DSAs is associated with the device for performing the action, the DSA being operable to forward the content to an associated device of the DSA; and
in response to a determination that the DSA is associated with the device, selecting the DSA from the plurality of DSAs; and
utilizing the DSA to forward the content to the device.

8. A controlled content delivery apparatus comprising:
a processor; and
a memory storing machine readable instructions that when executed by the processor cause the processor to:
assess information received from an information provider, the information including metadata;
analyze an information restriction rule associated with the information based on the metadata related to the information to determine a restriction related to use of the information;
analyze an information forwarding rule associated with the information based on the metadata to determine whether to forward the information to a device;
in response to a determination that the information is to be forwarded to the device, forward the information to the device;
in response to the determination that the information is to be forwarded to the device, determine an action permitted based on the use of the information specified by the restriction;
in response to a determination of the action permitted based on the use of the information specified by the restriction, instruct the device to perform the action;
determine whether the action has been performed based on a confirmation notification associated with the device;
**characterized in that**
in response to a determination that the action was not performed, analyze an information recipient rule associated with the information based on the metadata to determine whether to forward an information recipient notification to an information recipient;
in response to a determination to forward the content recipient notification to the content recipient, forwarding the content recipient notification to the content recipient by using a communication technique specified by the content recipient rule; and
in response to a determination that the action was performed, analyzing a content provider rule associated with the content based on the metadata to determine whether to forward a content provider notification to the content provider; and
in response to a determination to forward the content provider notification to the content provider, forwarding the content provider notification to the content provider by using a communication technique specified by the content provider rule.

9. The controlled content delivery apparatus according to claim 8, wherein the machine readable instructions to instruct the device to perform the action further comprise instructions to:
specify a maximum number of times that the information is to be printed before deletion of the information based on the restriction.

10. The controlled content delivery apparatus according to claim 8, wherein the machine readable instructions to instruct the device to perform the action further comprise instructions to:
specify a password needed to print the information based on the restriction.

11. A non-transitory computer readable medium having stored thereon machine readable instructions to provide controlled content delivery, the machine readable instructions, when executed, cause a processor to:
analyze a document forwarding rule associated with a document based on metadata related to the document to determine whether to forward the document to a device;
analyze a document restriction rule associated with the document based on the metadata to determine a restriction related to use of the document;
in response to a determination that the document is to be forwarded to the device, forward the document to the device for performing an action permitted based on the use of the document specified by the restriction;
analyze a confirmation notification associated with the device;
determine whether the action has been performed based on the confirmation notification;
**characterized in that**
in response to a determination that the action was not performed, analyze a document recipient rule associated with the document based on the metadata to determine whether to forward a document recipient notification to the document recipient; and
in response to a determination to forward the document recipient notification to the document recipient, determine, based on the analysis of the document recipient rule, to include in the document recipient notification an indication of a corrective act to be performed to enable the action to be performed subsequently; and
in response to a determination that the action was performed, analyzing a content provider rule associated with the content based on the metadata to determine whether to forward a content provider notification to the content provider; and
in response to a determination to forward the content provider notification to the content provider, forwarding the content provider notification to the content provider by using a communication technique specified by the content provider rule.

12. The non-transitory computer readable medium according to claim 11, further comprising instructions to:
in response to a determination to forward the document recipient notification to the document recipient, forward the document recipient notification to the document recipient by using a communication technique specified by the document recipient rule.

## Patentansprüche

1. Verfahren für eine kontrollierte Inhaltsabgabe, wobei das Verfahren Folgendes umfasst:
Bewerten von Inhalt, der durch einen Inhaltsempfänger von einem Inhaltsanbieter empfangen wurde, wobei der Inhalt Metadaten einschließt;
Analysieren, durch einen Prozessor, einer Inhaltsweiterleitungsregel, die dem Inhalt zugeordnet ist, basierend auf den Metadaten, die sich auf den Inhalt beziehen, um zu bestimmen, ob der Inhalt an eine Vorrichtung weiterzuleiten ist, die dem Empfänger des Inhalts zugeordnet ist;
als Reaktion auf eine Bestimmung, dass der Inhalt an die Vorrichtung weiterzuleiten ist, Weiterleiten des Inhalts an die Vorrichtung zum Durchführen einer Aktion, die sich auf den Inhalt bezieht;
Empfangen einer Bestätigungsbenachrichtigung, die der Vorrichtung zugeordnet ist;
Bestimmen, ob die Aktion basierend auf der Bestätigungsbenachrichtigung durchgeführt worden ist;
**gekennzeichnet durch**, als Reaktion auf eine Bestimmung, dass die Aktion nicht durchgeführt worden ist, Analysieren einer Inhaltsempfängerregel, die dem Inhalt zugeordnet ist, basierend auf den Metadaten, um zu bestimmen, ob eine Inhaltsempfängerbenachrichtigung an den Inhaltsempfänger weiterzuleiten ist; und
als Reaktion auf eine Bestimmung, dass die Inhaltsempfängerbenachrichtigung an den Inhaltsempfänger weiterzuleiten ist, Weiterleiten der Inhaltsempfängerbenachrichtigung an den Inhaltsempfänger durch Verwenden einer Kommunikationstechnik, die durch die Inhaltsempfängerregel spezifiziert ist; und
als Reaktion auf eine Bestimmung, dass die Aktion durchgeführt worden ist, Analysieren einer Inhaltsanbieterregel, die dem Inhalt zugeordnet ist, basierend auf den Metadaten, um zu bestimmen, ob eine Inhaltsanbieterbenachrichtigung an den Inhaltsanbieter weiterzuleiten ist; und
als Reaktion auf eine Bestimmung, dass die Inhaltsanbieterbenachrichtigung an den Inhaltsanbieter weiterzuleiten ist, Weiterleiten der Inhaltsanbieterbenachrichtigung an den Inhaltsanbieter durch Verwenden einer Kommunikationstechnik, die durch die Inhaltsempfängerregel spezifiziert ist.

2. Verfahren für eine kontrollierte Inhaltsabgabe nach Anspruch 1, wobei das Analysieren einer Inhaltsempfängerregel, die dem Inhalt zugeordnet ist, basierend auf den Metadaten, um zu bestimmen, ob eine Inhaltsempfängerbenachrichtigung an den Inhaltsempfänger weiterzuleiten ist, ferner Folgendes umfasst:
Bestimmen, basierend auf der Analyse der Inhaltsempfängerregel, in die Benachrichtigung des Inhaltsempfängers eine Angabe über eine Korrekturmaßnahme einzuschließen, die durchzuführen ist, um zu ermöglichen, dass die Aktion anschließend durchgeführt wird.

3. Verfahren für eine kontrollierte Inhaltsabgabe nach Anspruch 1, wobei die Aktion ein Drucken des Inhalts einschließt.

4. Verfahren für eine kontrollierte Inhaltsabgabe nach Anspruch 1, wobei das Weiterleiten des Inhalts an die Vorrichtung zum Durchführen einer Aktion, die sich auf den Inhalt bezieht, ferner Folgendes umfasst:
Erzeugen von Anweisungen, die spezifizieren, wie der Inhalt basierend auf den Metadaten zu drucken ist, wobei die Anweisungen durch die Vorrichtung ausführbar sind, um die Vorrichtung zu veranlassen, den Inhalt basierend auf der Spezifikation zu drucken.

5. Verfahren zur kontrollierten Inhaltsabgabe nach Anspruch 1, wobei das Weiterleiten des Inhalts an die Vorrichtung zum Durchführen einer Aktion, die sich auf den Inhalt bezieht, ferner Folgendes umfasst:
Erzeugen von Anweisungen, die eine Zeitperiode spezifizieren, die dem Drucken des Inhalts zugeordnet ist, basierend auf den Metadaten, wobei die Anweisungen durch die Vorrichtung ausführbar sind, um die Vorrichtung zu veranlassen, den Inhalt während der spezifizierten Zeitperiode zu drucken.

6. Verfahren für eine kontrollierte Inhaltsabgabe nach Anspruch 1, wobei das Analysieren der Inhaltsweiterleitungsregel, die dem Inhalt zugeordnet ist, basierend auf den Metadaten, die sich auf den Inhalt beziehen, um zu bestimmen, ob der Inhalt an eine Vorrichtung weiterzuleiten ist, die mit einem Inhaltsempfänger zugeordnet ist, und das Weiterleiten des Inhalts an die Vorrichtung zur Durchführung einer Aktion, die sich auf den Inhalt bezieht, ferner Folgendes umfasst:
Analysieren mehrerer Vorrichtungen, die dem Inhaltsempfänger zugeordnet sind, um zu bestimmen, ob die Vorrichtung der mehreren Vorrichtungen in der Lage ist, die Aktion auszuführen;
als Reaktion auf eine Bestimmung, dass die Vorrichtung in der Lage ist, die Aktion durchzuführen, Auswählen der Vorrichtung aus den mehreren Vorrichtungen; und
Weiterleiten des Inhalts an die Vorrichtung.

7. Verfahren für eine kontrollierte Inhaltsabgabe nach Anspruch 1, wobei das Analysieren einer Inhaltsweiterleitungsregel, die dem Inhalt zugeordnet ist, basierend auf den Metadaten, die sich auf den Inhalt beziehen, um zu bestimmen, ob der Inhalt an eine Vorrichtung weiterzuleiten ist, die einem Inhaltsempfänger zugeordnet ist, und das Weiterleiten des Inhalts an die Vorrichtung zum Durchführen einer Aktion, die sich auf den Inhalt bezieht, ferner Folgendes umfasst:
Bestimmen, ob ein Abgabesystemadapter (*Delivery System Adapter-* DSA) mehrerer DSAs der Vorrichtung zum Durchführen der Aktion zugeordnet ist, wobei der DSA betriebsfähig ist, um den Inhalt an eine zugeordnete Vorrichtung des DSA weiterzuleiten; und
als Reaktion auf eine Bestimmung, dass der DSA der Vorrichtung zugeordnet ist, Auswählen des DSA aus den mehreren DSAs; und
Verwenden des DSA, um den Inhalt an die Vorrichtung weiterzuleiten.

8. Einrichtung für eine kontrollierte Inhaltsabgabe, die Folgendes umfasst:
einen Prozessor; und
einen Speicher, der maschinenlesbare Anweisungenspeichert, die, wenn sie durch den Prozessor ausgeführt werden, den Prozessor zu Folgendem veranlassen:
Beurteilen der Informationen, die von einem Informationsanbieter erhalten wurden, wobei die Informationen Metadaten einschließen;
Analysieren einer Informationseinschränkungsregel, die den Informationen zugeordnet ist, basierend auf den Metadaten, die sich auf die Informationen beziehen, um eine Beschränkung in Bezug auf die Verwendung der Informationen zu bestimmen;
Analysieren einer Informationsweiterleitungsregel, die den Informationen zugeordnet ist, basierend auf den Metadaten, um zu bestimmen, ob die Informationen an eine Vorrichtung weiterzuleiten sind;
als Reaktion auf eine Bestimmung, dass die Informationen an die Vorrichtung weiterzuleiten sind, Weiterleiten der Informationen an die Vorrichtung;
als Reaktion auf eine Bestimmung, dass die Informationen an die Vorrichtung weiterzuleiten sind, Bestimmen einer Aktion, basierend auf der Verwendung der Informationen, die durch die Einschränkung spezifiziert ist.
als Reaktion auf eine Bestimmung der Aktion, die basierend auf der Verwendung der Informationen, die durch die Einschränkung spezifiziert sind, zulässig ist, Anweisen der Vorrichtung, die Aktion durchzuführen;
Bestimmen, ob die Aktion durchgeführt worden ist, basierend auf einer Bestätigungsbenachrichtigung, die der Vorrichtung zugeordnet ist;
**gekennzeichnet durch**, als Reaktion auf eine Bestimmung, dass die Aktion nicht durchgeführt worden ist, Analysieren einer Informationsempfängerregel, die den Informationen zugeordnet ist, basierend auf den Metadaten, um zu bestimmen, ob eine Informationsempfängerbenachrichtigung an einen Informationsempfänger weiterzuleiten ist;
als Reaktion auf eine Bestimmung, dass die Inhaltsempfängerbenachrichtigung an den Inhaltsempfänger weiterzuleiten ist, Weiterleiten der Inhaltsempfängerbenachrichtigung an den Inhaltsempfänger durch Verwenden einer Kommunikationstechnik, die durch die Inhaltsempfängerregel spezifiziert ist; und
als Reaktion auf eine Bestimmung, dass die Aktion durchgeführt worden ist, Analysieren einer Inhaltsanbieterregel, die dem Inhalt zugeordnet ist, basierend auf den Metadaten, um zu bestimmen, ob eine Inhaltsanbieterbenachrichtigung an den Inhaltsanbieter weiterzuleiten ist; und
als Reaktion auf eine Bestimmung, dass die Inhaltsanbieterbenachrichtigung an den Inhaltsanbieter weiterzuleiten ist, Weiterleiten der Inhaltsanbieterbenachrichtigung an den Inhaltsanbieter durch Verwenden einer Kommunikationstechnik, die durch die Inhaltsempfängerregel spezifiziert ist.

9. Einrichtung für eine kontrollierte Inhaltsabgabe nach Anspruch 8, wobei die maschinenlesbaren Anweisungen, um die Vorrichtung anzuweisen, die Aktion durchzuführen, ferner Anweisungen für Folgendes umfassen:
Spezifizieren einer maximalen Anzahl von Malen, die die Informationen zu drucken sind, bevor die Informationen basierend auf der Einschränkung gelöscht werden.

10. Einrichtung für eine kontrollierte Inhaltsabgabe nach Anspruch 8, wobei die maschinenlesbaren Anweisungen, um die Vorrichtung anzuweisen, die Aktion durchzuführen, ferner Anweisungen für Folgendes umfassen:
Spezifizieren eines Passworts, das benötigt wird, um die Informationen basierend auf der Einschränkung zu drucken.

11. Nicht flüchtiges computerlesbares Medium, auf dem maschinenlesbare Anweisungen gespeichert sind, um eine kontrollierte Inhaltsabgabe anzubieten, wobei die maschinenlesbaren Anweisungen, wenn sie ausgeführt werden, einen Prozessor zu Folgendem veranlassen:
Analysieren einer Dokumentweiterleitungsregel, die einem Dokument zugeordnet ist, basierend auf Metadaten, die sich auf das Dokument beziehen, um zu bestimmen, ob das Dokument an eine Vorrichtung weiterzuleiten ist;
Analysieren einer Dokumenteinschränkungsregel, die dem Dokument zugeordnet ist, basierend auf den Metadaten, um eine Einschränkung in Bezug auf die Verwendung des Dokuments zu bestimmen;
als Reaktion auf eine Bestimmung, dass das Dokument an die Vorrichtung weiterzuleiten ist, Weiterleiten des Dokuments an die Vorrichtung zum Durchführen einer Aktion, die basierend auf der Verwendung des Dokuments, die durch die Einschränkung spezifiziert ist, zulässig ist;
Analysieren einer Bestätigungsbenachrichtigung, die der Vorrichtung zugeordnet ist;
Bestimmen, ob die Aktion basierend auf der Bestätigungsbenachrichtigung durchgeführt worden ist;
**gekennzeichnet durch**, als Reaktion auf eine Bestimmung, dass die Aktion nicht durchgeführt worden ist, Analysieren einer Dokumentenempfängerregel, die dem Dokument zugeordnet ist, basierend auf den Metadaten, um zu bestimmen, ob eine Dokumentenempfängerbenachrichtigung an den Dokumentenempfänger weiterzuleiten ist; und
als Reaktion auf eine Bestimmung, dass die Dokumentempfängerbenachrichtigung an den Dokumentempfänger weiterzuleiten ist, Bestimmen, basierend auf der Analyse der Dokumentempfängerregel, dass die Dokumentempfängerbenachrichtigung eine Angabe über eine Korrekturmaßnahme einschließt, die durchzuführen ist, um zu ermöglichen, dass die Aktion anschließend durchgeführt wird; und
als Reaktion auf eine Bestimmung, dass die Aktion durchgeführt worden ist, Analysieren einer Inhaltsanbieterregel, die dem Inhalt zugeordnet ist, basierend auf den Metadaten, um zu bestimmen, ob eine Inhaltsanbieterbenachrichtigung an den Inhaltsanbieter weiterzuleiten ist; und
als Reaktion auf eine Bestimmung, dass die Inhaltsanbieterbenachrichtigung an den Inhaltsanbieter weiterzuleiten ist, Weiterleiten der Inhaltsanbieterbenachrichtigung an den Inhaltsanbieter durch Verwenden einer Kommunikationstechnik, die durch die Inhaltsempfängerregel spezifiziert ist.

12. Nicht flüchtiges computerlesbares Medium nach Anspruch 11, das ferner Anweisungen für Folgendes umfasst:
als Reaktion auf eine Bestimmung, dass die Dokumentempfängerbenachrichtigung an den Dokumentempfänger weiterzuleiten ist, Weiterleiten der Dokumentempfängerbenachrichtigung an den Dokumentempfänger durch Verwenden einer Kommunikationstechnik, die durch die Dokumentempfängerregel bestimmt wird.

## Revendications

1. Procédé de distribution de contenu contrôlée, le procédé comprenant :
l'évaluation du contenu reçu par un destinataire de contenu d'un fournisseur de contenu, le contenu comprenant des métadonnées ;
l'analyse, par un processeur, d'une règle de transmission de contenu associée au contenu, sur la base des métadonnées liées au contenu, pour déterminer s'il faut transmettre le contenu à un dispositif associé au destinataire de contenu ;
en réponse à une détermination selon laquelle le contenu doit être transmis au dispositif, la transmission du contenu au dispositif pour effectuer une action, liée au contenu ;
la réception d'une notification de confirmation associée au dispositif ;
la détermination de savoir si l'action a été effectuée sur la base de la notification de confirmation ;
**caractérisé en ce que**,
en réponse à une détermination selon laquelle l'action n'a pas été effectuée, l'analyse d'une règle de destinataire de contenu associée au contenu sur la base des métadonnées pour déterminer s'il faut transmettre une notification de destinataire de contenu au destinataire de contenu ; et
en réponse à une détermination de transmettre la notification de destinataire de contenu au destinataire de contenu, la transmission de la notification de destinataire de contenu au destinataire de contenu à l'aide d'une technique de communication spécifiée par la règle de destinataire de contenu ; et
en réponse à une détermination que l'action a été effectuée, l'analyse d'une règle de fournisseur de contenu associée au contenu sur la base des métadonnées pour déterminer s'il faut transmettre une notification de fournisseur de contenu au fournisseur de contenu ; et
en réponse à une détermination de transmettre la notification de fournisseur de contenu au fournisseur de contenu, la transmission de la notification de fournisseur de contenu au fournisseur de contenu à l'aide d'une technique de communication spécifiée par la règle de fournisseur de contenu.

2. Procédé de distribution de contenu contrôlée selon la revendication 1, dans lequel l'analyse d'une règle de destinataire de contenu associée au contenu sur la base des métadonnées pour déterminer s'il faut transmettre une notification de destinataire de contenu au destinataire de contenu comprend en outre :
la détermination, sur la base de l'analyse de la règle de destinataire de contenu, d'inclure dans la notification de destinataire de contenu une indication d'un acte correctif à effectuer pour permettre à l'action d'être effectuée ultérieurement.

3. Procédé de distribution de contenu contrôlée selon la revendication 1, dans lequel l'action comporte l'impression du contenu.

4. Procédé de distribution de contenu contrôlée selon la revendication 1, dans lequel la transmission du contenu au dispositif pour effectuer une action liée au contenu comprend en outre :
la génération des instructions qui spécifient comment imprimer le contenu sur la base des métadonnées, les instructions pouvant être exécutées par le dispositif pour amener le dispositif à imprimer le contenu sur la base de la spécification.

5. Procédé de distribution de contenu contrôlée selon la revendication 1, dans lequel la transmission du contenu au dispositif pour effectuer une action liée au contenu comprend en outre :
la génération des instructions qui spécifient une période de temps associée à l'impression du contenu sur la base des métadonnées, les instructions pouvant être exécutées par le dispositif pour amener le dispositif à imprimer le contenu pendant la période de temps spécifiée.

6. Procédé de distribution de contenu contrôlée selon la revendication 1, dans lequel l'analyse de la règle de transmission de contenu associée au contenu sur la base des métadonnées liées au contenu pour déterminer s'il faut transmettre le contenu à un dispositif associé à un destinataire de contenu et la transmission du contenu au dispositif pour effectuer une action liée au contenu comprend en outre :
l'analyse d'une pluralité de dispositifs qui sont associés au destinataire de contenu pour déterminer si le dispositif de la pluralité de dispositifs est capable d'effectuer l'action ;
en réponse à une détermination que le dispositif est capable d'effectuer l'action, la sélection du dispositif dans la pluralité de dispositifs ; et
la transmission du contenu au dispositif.

7. Procédé de distribution de contenu contrôlée selon la revendication 1, dans lequel l'analyse d'une règle de transmission de contenu associée au contenu sur la base des métadonnées liées au contenu pour déterminer s'il faut transmettre le contenu à un dispositif associé à un destinataire de contenu et transmettre le contenu au dispositif pour effectuer une action liée au contenu comprend en outre :
la détermination de savoir si un adaptateur de système de distribution (DSA) d'une pluralité de DSA est associé au dispositif pour effectuer l'action, le DSA pouvant fonctionner pour transmettre le contenu à un dispositif associé du DSA ; et
en réponse à une détermination que le DSA est associé au dispositif, la sélection du DSA dans la pluralité de DSA; et
l'utilisation du DSA pour transmettre le contenu au dispositif.

8. Appareil de distribution de contenu contrôlée comprenant :
un processeur ; et
une mémoire stockant des instructions lisibles par machine qui, lorsqu'elles sont exécutées par le processeur, amènent le processeur à :
évaluer les informations reçues d'un fournisseur d'informations, les informations comportant les métadonnées ;
analyser une règle de restriction d'informations associée aux informations sur la base des métadonnées liées aux informations pour déterminer une restriction liée à l'utilisation des informations ;
analyser une règle de transmission d'informations associée aux informations sur la base des métadonnées pour déterminer s'il faut transmettre les informations à un dispositif ;
en réponse à une détermination selon laquelle les informations doivent être transmises au dispositif, transmettre les informations au dispositif ;
en réponse à la détermination que les informations doivent être transmises au dispositif, déterminer une action autorisée sur la base de l'utilisation des informations spécifiées par la restriction ;
en réponse à une détermination de l'action autorisée sur la base de l'utilisation des informations spécifiées par la restriction, demander au dispositif d'effectuer l'action ;
déterminer si l'action a été effectuée sur la base d'une notification de confirmation associée au dispositif ;
**caractérisé en ce que**,
en réponse à une détermination que l'action n'a pas été effectuée, analyser une règle de destinataire d'informations associée aux informations sur la base des métadonnées pour déterminer s'il convient de transmettre une notification de destinataire d'informations à un destinataire d'informations ;
en réponse à une détermination de transmettre la notification de destinataire de contenu au destinataire de contenu, transmettre la notification de destinataire de contenu au destinataire de contenu à l'aide d'une technique de communication spécifiée par la règle de destinataire de contenu ; et
en réponse à une détermination que l'action a été effectuée, analyser une règle de fournisseur de contenu associée au contenu sur la base des métadonnées pour déterminer s'il faut transmettre une notification de fournisseur de contenu au fournisseur de contenu ; et
en réponse à une détermination de transmettre la notification de fournisseur de contenu au fournisseur de contenu, transmettre la notification de fournisseur de contenu au fournisseur de contenu à l'aide d'une technique de communication spécifiée par la règle de fournisseur de contenu.

9. Appareil de distribution de contenu contrôlée selon la revendication 8, dans lequel les instructions lisibles par machine pour demander au dispositif d'effectuer l'action comprennent en outre des instructions pour :
spécifier un nombre maximum de fois où les informations doivent être imprimées avant la suppression des informations sur la base de la restriction.

10. Appareil de distribution de contenu contrôlée selon la revendication 8, dans lequel les instructions lisibles par machine pour demander au dispositif d'effectuer l'action comprennent en outre des instructions pour :
spécifier un mot de passe nécessaire pour imprimer les informations sur la base de la restriction.

11. Support lisible par ordinateur non transitoire sur lequel sont stockées des instructions lisibles par machine pour fournir une distribution de contenu contrôlée, les instructions lisibles par machine, lorsqu'elles sont exécutées, amènent un processeur à :
analyser une règle de transmission de document associée à un document sur la base de métadonnées liées au document pour déterminer s'il faut transmettre le document à un dispositif ;
analyser une règle de restriction de document associée au document sur la base des métadonnées pour déterminer une restriction liée à l'utilisation du document ;
en réponse à une détermination selon laquelle le document doit être transmis au dispositif, transmettre le document au dispositif pour effectuer une action autorisée sur la base de l'utilisation du document spécifié par la restriction ;
analyser une notification de confirmation associée au dispositif ;
déterminer si l'action a été effectuée sur la base de la notification de confirmation ;
**caractérisé en ce que**
en réponse à une détermination que l'action n'a pas été effectuée, analyser une règle de destinataire de document associée au document sur la base des métadonnées pour déterminer s'il faut transmettre une notification de destinataire de document au destinataire de document ; et
en réponse à une décision de transmettre la notification de destinataire de document au destinataire de document, déterminer, sur la base de l'analyse de la règle de destinataire de document, inclure dans la notification de destinataire de document une indication d'un acte correctif à effectuer pour permettre à l'action d'être effectuée par la suite ; et
en réponse à une détermination que l'action a été effectuée, analyser une règle de fournisseur de contenu associée au contenu sur la base des métadonnées pour déterminer s'il faut transmettre une notification de fournisseur de contenu au fournisseur de contenu ; et
en réponse à une détermination de transmettre la notification de fournisseur de contenu au fournisseur de contenu, transmettre la notification de fournisseur de contenu au fournisseur de contenu à l'aide d'une technique de communication spécifiée par la règle de fournisseur de contenu.

12. Support lisible par ordinateur non transitoire selon la revendication 11, comprenant en outre des instructions pour :
en réponse à une décision de transmettre la notification de destinataire de document au destinataire de document, transmettre la notification de destinataire de document au destinataire de document à l'aide d'une technique de communication spécifiée par la règle de destinataire de document.
